# EUROPEAN PATENT SPECIFICATION

(11) **EP 3 098 701 B1**
(45) Date of publication and mention of the grant of the patent: **29.07.2020**
(21) Application number: 16171707.9
(22) Date of filing: 27.05.2016
(51) Int. Cl.: G06F 3/0481, G06F 3/0486

(54) **METHOD AND APPARATUS FOR MANAGING TERMINAL APPLICATION**
VERFAHREN UND VORRICHTUNGEN ZUR VERWALTUNG VON ENDGERÄTEN
PROCÉDÉ ET APPAREIL DE GESTION D'APPLICATION DE TERMINAL

(30) Priority: 29.05.2015 CN 201510291090
(43) Date of publication of application: 30.11.2016
(73) Proprietor: Xiaomi Inc., Beijing 100085 (CN)
(72) Inventor: XIANGLI, Fei, Haidian District Beijing 100085 (CN); QIAN, Zhuang, Haidian District Beijing 100085 (CN); CHENG, Shengbo, Haidian District Beijing100085 (CN)
(74) Representative: Robson, Aidan John

(56) References cited:
- US-A1- 2011 252 346
- US-A1- 2012 084 688
- US-A1- 2014 075 354
- US-A1- 2015 026 616

## Description

### TECHNICAL FIELD

The present disclosure relates to a terminal field, and more particularly, to a method and an apparatus for managing a terminal application.

### BACKGROUND

Many smart phone users tend to organize and store applications in folders. With an increase of daily applications, the application folders on the desktop have played a more and more important action.

In most current operating systems of mobile terminals, a general operation process for moving an application from one folder to another folder is as follows:
1. opening the folder where the application is located;
2. long pressing the application in the folder;
3. dragging the application to leave the folder interface (system screen jump);
4. dragging the application on the desktop to find the target folder;
5. dragging the application to suspend above the target folder until the target folder opens automatically (system screen jump);
6. releasing the finger long pressing the application, after selecting the position for placing the application in the target folder.

D1 (US2014075354A1) discloses an apparatus and method for providing a user interface for data management that may simplify editing of data files and folders in a mobile terminal through a touch-based operation.

### SUMMARY

In order to overcome the problems existing in the related art, embodiments of the present disclosure provide a method and an apparatus for managing a terminal application, which can simplify a user's operation while managing a terminal application.

According to a first aspect of embodiments of the present disclosure, there is provided a method for managing a terminal application according to independent claim 1.

The method further includes:
after deleting the application icon from the first folder and adding the application icon into the selected target folder, maintaining the first folder unfolded as a current active interface.

Monitoring that there is a between-folder moving trigger event of an application icon includes:
monitoring that there is a predetermined action performed on the application icon to be moved in the first folder unfolded.

Monitoring that there is a between-folder moving end event of the application icon includes:
monitoring that the application icon is switched from a pressed state to a released state; or
monitoring that there is a selecting operation on the target folder.

Deleting the application icon from the first folder and adding the application icon into the selected target folder includes:
deleting the application icon from the first folder, and arranging according to a preset rule and displaying application icons other than the application icon in the first folder; and
adding the application icon into a preset location in the selected target folder.

The method further includes:
cancelling displaying of the target folder in the visible area of the current desktop, when monitoring that there is a between-folder moving cancelling event of the application icon.

Monitoring that there is a between-folder moving cancelling event of the application icon includes:
monitoring that a preset cancellation gesture is performed on the current desktop, the preset cancellation gesture being corresponding to a between-folder moving cancelling operation of the application icon; or
monitoring that there is a preset cancelling operation on a preset key of a terminal, the preset cancelling operation on the preset key being corresponding to a between-folder moving cancelling operation of the application icon.

According to a second aspect of embodiments of the present disclosure, there is provided a terminal for managing a terminal application according to independent claim 7.

The terminal further includes:
a maintaining module, configured to maintain the first folder unfolded as a current active interface, after the between-folder moving module adds the application icon into the selected target folder.

The terminal further includes a first monitoring module configured to monitor a predetermined action performed on the application icon to be moved in the first folder unfolded.

The terminal further includes:
a second monitoring module, configured to monitor that the application icon is switched from a pressed state to a released state; or
a third monitoring module, configured to monitor a selecting operation on the target folder.

The between-folder moving module includes:
an arranging sub-module, configured to arrange according to a preset rule and display application icons other than the application icon in the first folder; and
an adding sub-module, configured to add the application icon into a preset location in the selected target folder.

The terminal further includes:
a fourth monitoring module, configured to monitor a between-folder moving cancelling event of the application icon; and
a cancelling module, configured to cancel displaying of the target folder in the visible area of the current desktop, when it is monitored that there is the between-folder moving cancelling event of the application icon.

The fourth monitoring module includes:
a first monitoring sub-module, configured to monitor a preset cancellation gesture performed on the current desktop, the preset cancellation gesture being corresponding to a between-folder moving cancelling operation of the application icon; or
a second monitoring sub-module, configured to monitor a preset cancelling operation on a preset key of the terminal, the preset cancelling operation on the preset key being corresponding to a between-folder moving cancelling operation of the application icon.

The technical solutions provided by embodiments of the present disclosure may include following beneficial effects.

In the above solutions, when it is monitored that there is the between-folder moving trigger event of the application icon, at least one target folder is displayed in the visible area of the current desktop; when it is monitored that there is the between-folder moving end event of the application icon, a selected target folder is determined from the at least one target folder, the application icon is deleted from the first folder and the application icon is added into the selected target folder. During the whole process for moving the application icon, it does not need too much manual operation of the user, thus simplifying an operation process.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for managing a terminal application according to a first example embodiment.
Fig. 2 is a flow chart showing a method for managing a terminal application according to a second example embodiment.
Fig. 3 is a flow chart showing a method for managing a terminal application according to a third example embodiment.
Fig. 4A is a schematic diagram showing a desktop displaying effect of a terminal before operation according to the first example embodiment.
Fig. 4B is a schematic diagram showing a desktop displaying effect of a terminal when an operation instruction of a user for moving an application icon from a first folder is monitored, according to the first example embodiment.
Fig. 4C is a schematic diagram showing a displaying effect when a communication application icon in the first folder is pressed, according to the first example embodiment.
Fig. 4D is a schematic diagram showing a displaying effect when the instant communication application icon in the first folder is removed and a current active interface of the desktop is still an interface showing the first folder, according to the first example embodiment.
Fig. 5 is a block diagram of an apparatus for managing a terminal application according to the first example embodiment.
Fig. 6 is a block diagram of an apparatus for managing a terminal application according to the second example embodiment.
Fig. 7 is a block diagram of a target folder displaying module 51 in the apparatus for managing a terminal application according to the second example embodiment.
Fig. 8 is a block diagram of a between-folder moving module 52 in the apparatus for managing a terminal application according to the second example embodiment.
Fig. 9 is a block diagram of a fourth monitoring module 58 in the apparatus for managing a terminal application according to the second example embodiment.
Fig. 10 is a block diagram of an apparatus for managing a terminal application according to an example embodiment.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

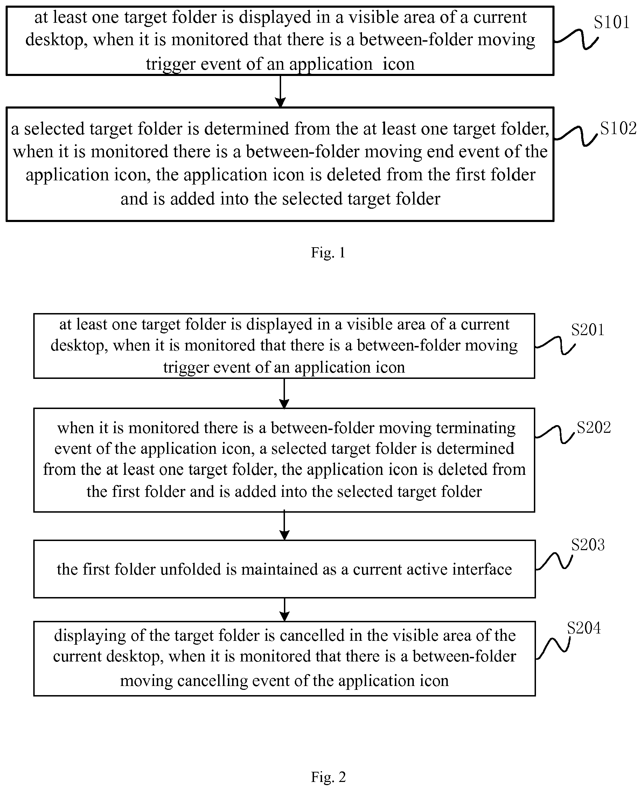

Fig. 1 is a flow chart showing a method for managing a terminal application according to an example embodiment. As shown in Fig. 1, the method for managing a terminal application is used in managing and organizing applications in a terminal apparatus, such as a mobile phone, a camera and a panel computer, and includes the following steps.

In step 101, at least one target folder is displayed in a visible area of a current desktop, when it is monitored that there is a between-folder moving trigger event of an application icon; the target folder is different from a first folder where the application icon is located.

In step 102, when it is monitored there is a between-folder moving end event of the application icon, a selected target folder is determined from the at least one target folder, the application icon is deleted from the first folder and is added into the selected target folder.

In the solution above, when it is monitored that there is the between-folder moving trigger event of the application icon, at least one target folder is displayed in the visible area of the current desktop; when it is monitored that there is the between-folder moving end event of the application icon, a selected target folder is determined from the at least one target folder, the application icon is deleted from the first folder and the application icon is added into the selected target folder. During the whole process for moving the application icon, it does not need too much manual operation of the user, thus simplifying an operation process.

Fig. 2 is a flow chart showing a method for managing a terminal application according to a second example embodiment. As shown in Fig. 2, the method for managing a terminal application is used in managing and organizing applications in a terminal apparatus, such as a mobile phone, a camera and a panel computer, and includes the following steps.

In step 201, at least one target folder is displayed in a visible area of a current desktop, when it is monitored that there is a between-folder moving trigger event of an application icon; the target folder is different from a first folder where the application icon is located.

Herein, the application icon is a shortcut icon of the application.

Monitoring that there is a between-folder moving trigger event of an application icon includes: monitoring that there is a predetermined action performed on the application icon to be moved in the first folder unfolded. The predetermined action may be that a shortcut icon of the application to be moved is in a pressed state and lasts for a preset period, or may be a circling action on the shortcut icon of the application to be moved.

Displaying at least one target folder in the visible area of the current desktop includes: displaying folders other than the first folder of the current desktop in the visible area of the current desktop.

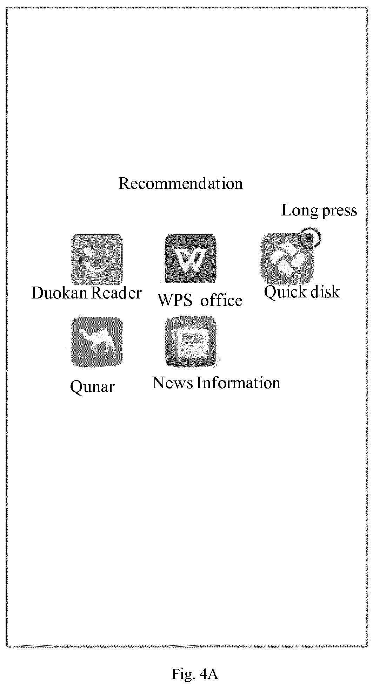

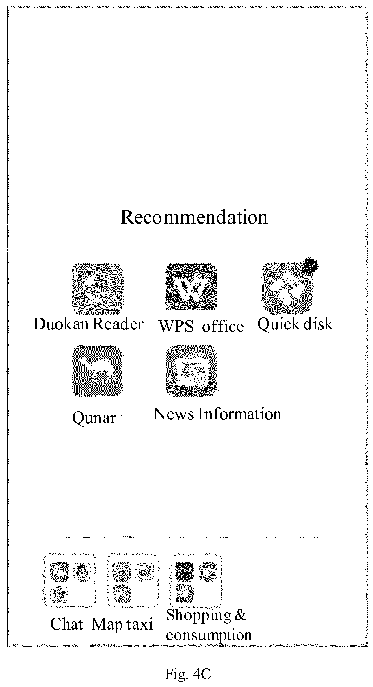

Or, displaying at least one target folder in a visible area of a current desktop includes: displaying folders other than the first folder of all desktops in the visible area of the current desktop. This step is applicable for a scene in which the terminal has a plurality of operation interfaces, that is, a scene in which the terminal has a plurality of desktops. As shown in Fig. 4A, which is a diagram showing a desktop displaying effect of a terminal before operation, it may be seen that, the first folder (i.e., the folder where the application to be moved is located) includes an instant communication application icon, a Duokan Reader application icon, etc. As shown in Fig. 4C, which is a schematic diagram showing a desktop displaying effect of a terminal when the between-folder moving trigger event of the application icon is monitored, it may be seen that, a plurality of target folders are displayed at a bottom of a display screen (i.e., the visible area of the current desktop).

Displaying at least one target folder in the visible area of the current desktop may be displaying only target folders, rather than displaying application icons contained in each target folder; or may be not only displaying the target folders, but also displaying the application icons contained in each target folder, as shown in Fig. 4C; or the like.

In step 202, when it is monitored there is a between-folder moving end event of the application icon, a selected target folder is determined from the at least one target folder, the application icon is deleted from the first folder and is added into the selected target folder.

Monitoring that there is a between-folder moving end event of the application icon includes: monitoring that the application icon is switched from a pressed state to a released state. As shown in Fig. 4C, Fig. 4C is a schematic diagram showing a displaying effect when a communication application icon in the first folder is pressed.

Or, monitoring that there is a between-folder moving end event of the application icon includes: monitoring that there is a selecting operation on the target folder. The selecting operation may be predetermined.

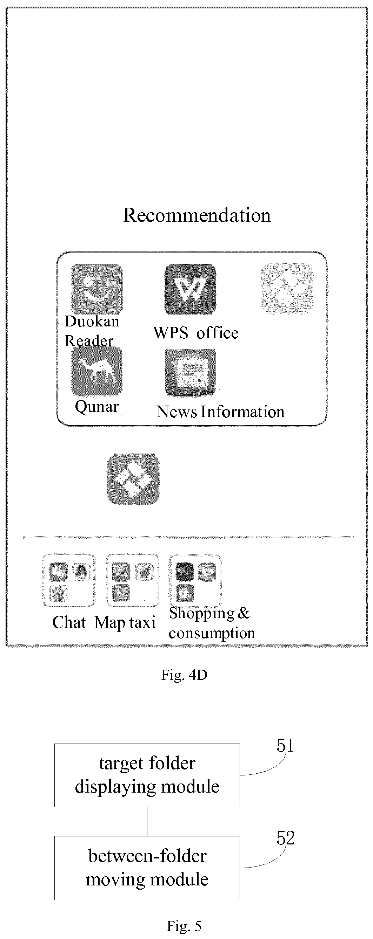

Deleting the application icon from the first folder and adding the application icon into the selected target folder includes: deleting the application icon from the first folder, and arranging according to a preset rule and displaying application icons other than the application icon in the first folder; and adding the application icon into a preset location in the selected target folder. The preset rule may be predetermined, e.g., arranging application icons according to a size, a name or a modification time of each application icon. As shown in Fig. 4D, Fig. 4D is a schematic diagram showing a displaying effect when the instant communication application icon in the first folder is removed.

It may be seen that, in above embodiments, during the whole process for moving the application icon, the user does not need too much manual operation, thus simplifying an operation process.

Alternatively, in another embodiment, the method may further include step 203.

In step 203, the first folder unfolded is maintained as a current active interface. As shown in Fig. 4D, Fig. 4D is a schematic diagram showing displaying effect when the instant communication application icon in the first folder is removed and the current active interface of the desktop is still an interface showing the first folder.

In above embodiment, during the process for moving the application icon from the first folder, there is no system page jump, and a current page is maintained as the first folder where the application icon moved is located before being moved, and thus it is convenient for the user to continue performing moving operations on other application icons in the first folder.

Alternatively, in another embodiment, the method may further include step 204.

In step 204, displaying of the target folder is cancelled in the visible area of the current desktop, when it is monitored that there is a between-folder moving cancelling event of the application icon.

Monitoring that there is a between-folder moving cancelling event of the application icon includes: monitoring that a preset cancellation gesture is performed on the current desktop, the preset cancellation gesture being corresponding to a between-folder moving cancelling operation of the application icon. the preset cancellation gesture may be predetermined, and the correspondence between the preset cancellation gesture and between-folder moving cancelling operation of the application icon may also be predetermined.

Or, monitoring that there is a between-folder moving cancelling event of the application icon includes: monitoring that there is a preset cancelling operation on a preset key of the terminal, the preset cancelling operation on the preset key being corresponding to a between-folder moving cancelling operation of the application icon. The preset cancelling operation may be predetermined. The correspondence between the preset canceling operation on the preset key and the between-folder moving cancelling operation of the application icon may also be predetermined.

In above embodiment, the user may conveniently terminate the operation of moving the application via operations.

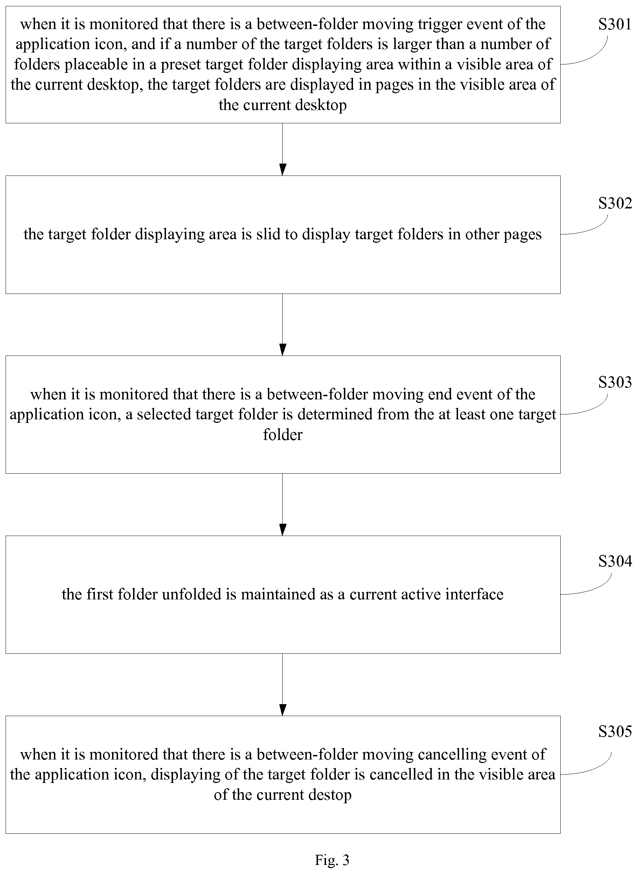

Fig. 3 is a flow chart showing a method for managing a terminal application according to an example embodiment. As shown in Fig. 3, the method for managing a terminal application is used in a terminal apparatus (such as a mobile phone, a camera and a panel computer) or in an application, and includes the following steps.

In step 301, when it is monitored that there is a between-folder moving trigger event of an application icon, and if a number of target folders is larger than a number of folders placeable in a preset target folder displaying area within the visible area of the current desktop, the target folders are displayed in pages in the visible area of the current desktop. The target folder is different from a first folder where the application icon is located. The application icon herein is a shortcut icon of an application.

Monitoring that there is a between-folder moving trigger event of an application icon includes: monitoring that there is a predetermined action performed on the application icon to be moved in the first folder unfolded, for instance, monitoring that a shortcut icon of the application to be moved is in a pressed state lasting for a preset period, or monitoring that there is a circling action on the shortcut icon of the application to be moved.

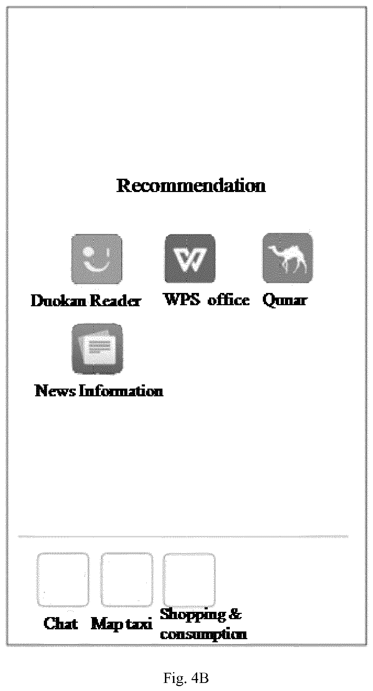

Displaying at least one target folder in the visible area of the current desktop includes: displaying folders other than the first folder of the current desktop in the visible area of the current desktop. Or, displaying at least one target folder in a visible area of a current desktop includes: displaying folders other than the first folder of all desktops in the visible area of the current desktop. This step is applicable for a scene in which a terminal has a plurality of operation interfaces, that is, a scene in which the terminal has a plurality of desktops. As shown in Fig. 4A, which is a schematic diagram showing a desktop displaying effect of a terminal before operation, it may be seen that, the first folder (i.e., the folder where the application to be moved is located) includes an instant communication application icon, a Duokan Reader application icon, etc. As shown in Fig. 4B, which is a schematic diagram showing a desktop displaying effect of a terminal when the between-folder moving trigger event of the application icon is monitored, it may be seen that, when the instant communication application icon in the first folder is pressed, a plurality of target folders are displayed at a bottom of a display screen (i.e., the visible area of the current desktop).

In step 302, the target folder displaying area is slid to display target folders in other pages.

In step 303, when it is monitored that there is a between-folder moving end event of the application icon, a selected target folder is determined from the at least one target folder, the application icon is deleted from the first folder and is added into the selected target folder.

Monitoring that there is a between-folder moving end event of the application icon includes: monitoring that the application icon is switched from a pressed state to a released state, as shown in Fig. 4C, which is a diagram showing a displaying effect when a communication application icon in the first folder is pressed. Or, monitoring that there is a between-folder moving end event of the application icon includes: monitoring that there is a selecting operation on the target folder. The selecting operation may be determined according to actual demands. The selecting operation may be predetermined.

Deleting the application icon from the first folder and adding the application icon into the selected target folder includes: deleting the application icon from the first folder, and arranging according to a preset rule and displaying application icons other than the application icon in the first folder; and adding the application icon into a preset location in the selected target folder. The preset rule may be predetermined, e.g., arranging application icons according to a size, a name or a modification time of each application icon.

It may be seen that, in above embodiments, during the whole process for moving the application icon, the user does not need too much manual operation, thus simplifying an operation process.

Alternatively, in another embodiment, the method may further include step 304.

In step 304, the first folder unfolded is maintained as a current active interface. As shown in Fig. 4D, Fig. 4D is a diagram showing displaying effect when the instant communication application icon in the first folder is removed and the current active interface of the desktop is still an interface showing the first folder.

In above embodiment, during the process for moving the application icon from the first folder, there is no system page jump, and a current page is maintained as the first folder where the application icon moved is located before being moved, and thus it is convenient for the user to continue performing moving operations on other application icons in the first folder.

Alternatively, in another embodiment, the method may further include step 305.

In step 305, displaying of the target folder is cancelled in the visible area of the current desktop, when it is monitored that there is a between-folder moving cancelling event of the application icon.

Monitoring that there is a between-folder moving cancelling event of the application icon includes: monitoring that a preset cancellation gesture is performed on the current desktop, the preset cancellation gesture being corresponding to a between-folder moving cancelling operation of the application icon. The preset cancellation gesture may be predetermined, and the correspondence between the preset cancellation gesture and the between-folder moving cancelling operation of the program icon may also be predetermined.

Or, monitoring that there is a between-folder moving cancelling event of the application icon includes: monitoring that there is a preset cancelling operation on a preset key of the terminal, the preset cancelling operation on the preset key being corresponding to a between-folder moving cancelling operation of the application icon. The preset cancelling operation may be predetermined. The correspondence between the preset cancelling operation on the preset key and the between-folder moving cancelling operation of the application icon may also be predetermined.

The above embodiment simplifies the procedure of moving an application icon in a folder, which shortens a moving time and enhances a user's experience.

An application scene of the present disclosure is described below. In this application scene, the method for managing the terminal application includes following steps.

In step 1, when it is monitored that a user needs to move an application icon in a folder (it is monitored that the user long presses the application icon in the folder), all other folders on a desktop are visibly displayed in the current folder.

In step 2, after an operation of moving the application in the folder is completed, what is displayed in a current interface is still the application folder before the moving operation, and thus the interface does not need to jump. For the user, one may conveniently continue performing moving operations on other application icons in this folder. In other words, after the application icon is moved into any of folders in a bottom folder area, the current folder is not closed, and the page visible to the user does not jump, that is, the current page is still the folder where the application icon is located originally.

In this application scene, when the user long presses one application icon in a first folder, a list of all other folders on the current desktop is displayed in a screen visible area at a bottom of the folder. The user may drag the application icon in a long-press state to any one folder and release hand (cancels long press), and thus the application icon is moved into a corresponding second folder automatically (i.e., the application icon disappears in the first folder and is placed at a last position in a second folder).

As shown in Fig. 5, it is provided an apparatus for managing a terminal application, including:
a target folder displaying module 51, configured to display at least one target folder in a visible area of a current desktop, when it is monitored that there is a between-folder moving trigger event of an application icon, the target folder being different from a first folder where the application icon is located.
a between-folder moving module 52, configured to determine a selected target folder from the at least one target folder when it is monitored that there is a between-folder moving end event of the application icon, to delete the application icon from the first folder and to add the application icon into the selected target folder.

In the solution above, when it is monitored that there is the between-folder moving trigger event of the application icon, at least one target folder is displayed in the visible area of the current desktop; when it is monitored that there is the between-folder moving end event of the application icon, a selected target folder is determined from the at least one target folder, the application icon is deleted from the first folder and the application icon is added into the selected target folder. During the whole process for moving the application icon, the user does not need too much manual operation, thus simplifying an operating process.

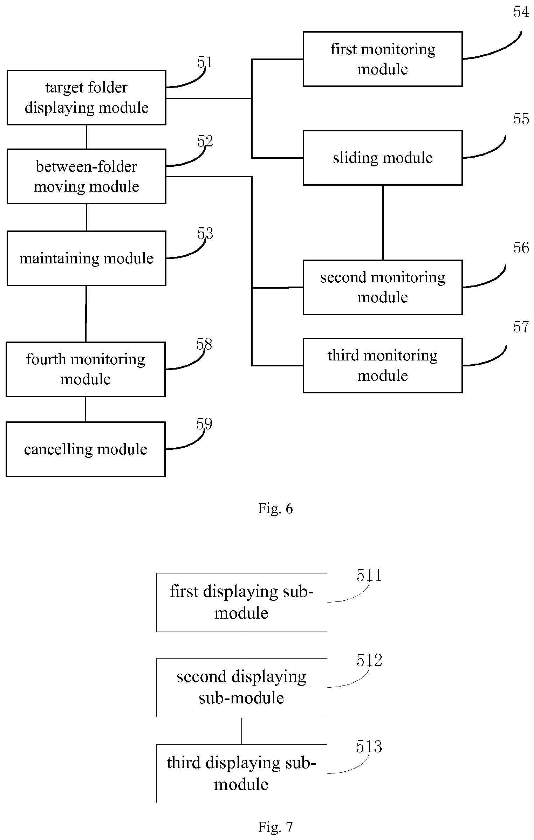

As shown in Fig. 6, it is provided an apparatus for managing a terminal application, including:
a target folder displaying module 51, configured to display at least one target folder in a visible area of a current desktop, when it is monitored that there is a between-folder moving trigger event of an application icon, the target folder being different from a first folder where the application icon is located.
a between-folder moving module 52, configured to determine a selected target folder from the at least one target folder when it is monitored that there is a between-folder moving end event of the application icon, to delete the application icon from the first folder and to add the application icon into the selected target folder.

In one embodiment, the apparatus for managing a terminal application provided by the present disclosure further includes: a maintaining module 53, configured to maintain the first folder unfolded as a current active interface, after the between-folder moving module adds the application icon into the selected target folder

In above embodiment, during the process for moving the application icon in the first folder, there is no system page jump, and a current page is maintained as the page where the first folder is located before the application icon to be moved is moved, and thus it is convenient for the user to continue to perform moving operations of other application icons in the first folder.

In one embodiment, the terminal further includes:
a first monitoring module 54, configured to monitor a predetermined action performed on the program icon to be moved in the first folder unfolded.

In one embodiment, the terminal further includes:
a sliding module 55, configured to slide the target folder displaying area to display target folders in other pages.

In one embodiment, the terminal further includes:
a second monitoring module 56, configured to monitor that the application icon is switched from a selected state to a released state; or
a third monitoring module 57, configured to monitor a selecting operation to the target folder.

In one embodiment, the terminal further includes:
a fourth monitoring module 58, configured to monitor a between-folder moving deleting event of the application icon;
a cancelling module 59, configured to cancel the displaying of the target folder in the visible area of the current desktop, when it is monitored that there is the between-folder moving deleting event of the application icon.

In one embodiment, as shown in Fig. 7, the target folder displaying module 51 includes:
a first displaying sub-module 511, configured to display folders other than the first folder of the current desktop in the visible area of the current desktop; or a second displaying sub-module 512, configured to display folders other than the first folder of all desktops in the visible area of the current desktop.

In one embodiment, as shown in Fig. 7, the target folder displaying module 51 includes:
a third displaying sub-module 513, configured to display the target folders in pages, if the number of the target folder is larger than the number of folder can be placed in a preset target folder displaying area within the visible area of the current desktop.

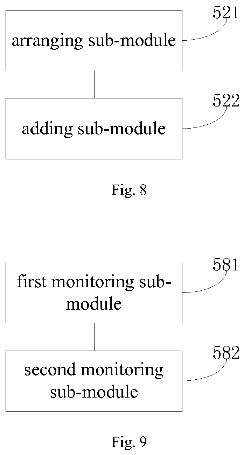

In one embodiment, as shown in Fig. 8, the between-folder moving module 52 includes:
an arranging sub-module 521, configured to arrange according to a preset rule and display application icons other than the application icon in the first folder;
an adding sub-module 522, configured to add the application icon into a preset location in the selected target folder.

In one embodiment, as shown in Fig. 9, the fourth monitoring module 58 includes:
a first monitoring sub-module 581, configured to monitor a preset cancellation gesture performed on the current desktop, the preset cancellation gesture being corresponding to a between-folder moving cancelling operation of the application icon; or a second monitoring module 582, configured to monitor a preset cancelling operation of a preset key of a terminal, the preset cancelling operation of the preset key being corresponding to a between-folder moving cancelling operation of the application icon.

It may be seen that, in above embodiments, during the whole process for moving the application icon, the user does not need too much manual operation, thus simplifying an operating process.

With respect to the devices in the above embodiments, the specific manners for performing operations for individual modules therein have been described in detail in the embodiments regarding the methods for managing a terminal application, which will not be elaborated herein.

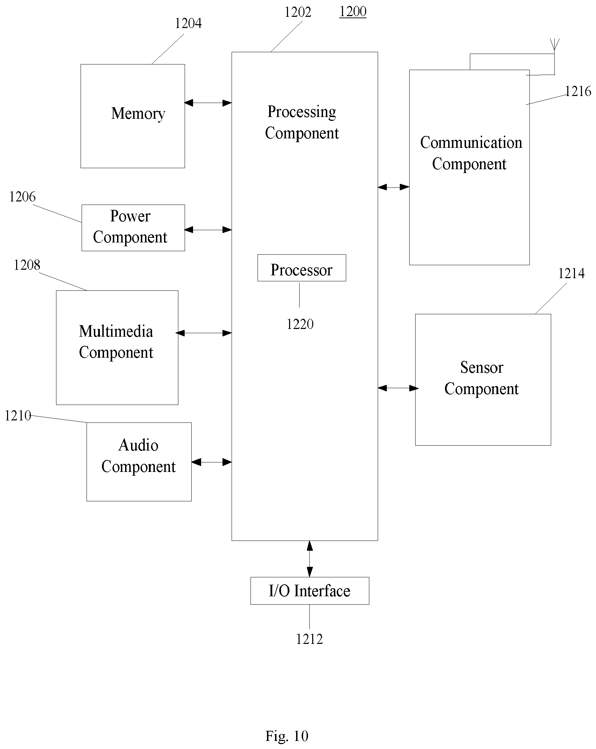

Fig. 10 is a block diagram of an apparatus 1200 for managing a terminal application according to an example embodiment. The apparatus is applicable for a terminal device. For example, the apparatus 1200 may be a mobile phone, a computer, a digital broadcast terminal, a messaging device, a gaming console, a tablet, a medical device, exercise equipment, a personal digital assistant, and the like.

Referring to Fig. 10, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one example embodiment, the communication component 1216 receives a broadcast signal or broadcast associated information from an external broadcast management system via a broadcast channel. In one example embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as included in the memory 1204, executable by the processor 1220 in the device 1200, for performing methods as claimed. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a terminal, causes the terminal to perform a method for managing a terminal as claimed.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for managing a terminal application, comprising:
displaying at least one application icon of a first folder of a current desktop;
displaying (S101, S201) at least one target folder in a visible area of a current desktop, when monitoring that there is a between-folder moving trigger event of an application icon, the target folder being different from the first folder where the application icon is located;
determining (S102, S202, S303) a selected target folder from the at least one target folder, when monitoring that there is a between-folder moving end event of the application icon, deleting the application icon from the first folder and adding the application icon into the selected target folder, and the first folder unfolded is maintained as a current active interface;
the method being **characterized in that**, displaying (S101) at least one target folder in a visible area of a current desktop, comprises:
displaying folders other than the first folder of the current desktop in the visible area of the current desktop; or
displaying folders other than the first folder of all desktops in the visible area of the current desktop;
wherein displaying at least one target folder in a visible area of a current desktop comprises:
displaying (S301) the target folders in pages displayed in a target folder displaying area in the visible area of the current desktop, if a number of the target folders is larger than a number of folders placeable in the target folder displaying area within the visible area of the current desktop;
the method further comprises:
sliding (S302) the target folder displaying area to display target folders in other pages.

2. The method of claim 1, further comprising:
after deleting the application icon from the first folder and adding the application icon into the selected target folder, maintaining (S203, S304) the first folder unfolded as a current active interface.

3. The method of claim 1, wherein monitoring that there is a between-folder moving trigger event of an application icon comprises:
monitoring that there is a predetermined action performed on the application icon to be moved in the first folder unfolded.

4. The method of claim 1, wherein monitoring that there is a between-folder moving end event of the application icon comprises:
monitoring that the application icon is switched from a pressed state to a released state; or
monitoring that there is a selecting operation on the target folder.

5. The method of claim 1, wherein deleting the application icon from the first folder and adding the application icon into the selected target folder comprises:
deleting the application icon from the first folder, and arranging according to a preset rule and displaying application icons other than the application icon in the first folder;
adding the application icon into a preset location in the selected target folder.

6. The method of claim 1, further comprising:
cancelling (S204, S305) displaying of the target folder in the visible area of the current desktop, when monitoring that there is a between-folder moving cancelling event of the application icon.

7. A terminal for managing a terminal application, comprising:
a target folder displaying module (51), configured to display at least one application icon of a first folder of a current desktop, and to display at least one target folder in a visible area of a current desktop, when monitoring that there is a between-folder moving trigger event of an application icon, the target folder being different from the first folder where the application icon is located;
a between-folder moving module (52), configured to determine a selected target folder from the at least one target folder, when monitoring that there is a between-folder moving end event of the application icon, to delete the application icon from the first folder and to add the application icon into the selected target folder, and the first folder unfolded is maintained as a current active interface;
the terminal being **characterized in that**, the target folder displaying module (51) includes:
a first displaying sub-module (511), configured to display folders other than the first folder of the current desktop in the visible area of the current desktop; or
a second displaying sub-module (512), configured to display folders other than the first folder of all desktops in the visible area of the current desktop;
wherein the target folder displaying module (51) comprises:
a third displaying sub-module (513), configured to display the target folders in pages in a target folder displaying area within the visible area of the current desktop, if a number of the target folders is larger than a number of folders placeable in the target folder displaying area within the visible area of the current desktop;
the terminal further comprises:
a sliding module (55), configured to slide the target folder displaying area so as to display target folders in other pages.

8. The terminal of claim 7, further comprising:
a maintaining module (53), configured to maintain the first folder unfolded as a current active interface, after the between-folder moving module adds the application icon into the selected target folder.

9. The terminal of claim 7, further comprising:
a first monitoring module (54), configured to monitor a predetermined action performed on the application icon to be moved in the first folder unfolded.

10. The terminal of claim 9, further comprising:
a second monitoring module (56), configured to monitor that the application icon is switched from a pressed state to a released state; or
a third monitoring module (57), configured to monitor a selecting operation on the target folder.

11. The terminal of claim 9, further comprising:
a fourth monitoring module (58), configured to monitor a between-folder moving cancelling event of the application icon;
a cancelling module (59), configured to cancel displaying of the target folder in the visible area of the current desktop, when it is monitored that there is the between-folder moving cancelling event of the application icon.

## Patentansprüche

1. Verfahren zum Verwalten einer Endgerätanwendung, umfassend:
Anzeigen wenigstens eines Anwendungssymbols eines ersten Ordners eines aktuellen Desktops;
Anzeigen (S101, S201) wenigstens eines Zielordners in einem sichtbaren Bereich eines aktuellen Desktops, wenn überwacht wird, dass es ein Zwischen-Ordnern-Bewegen-Auslöseereignis eines Anwendungssymbols gibt, wobei der Zielordner vom ersten Ordner verschieden ist, in dem sich das Anwendungssymbol befindet;
Bestimmen (S102, S202, S302) eines ausgewählten Zielordners aus dem wenigstens einen Zielordner, wenn überwacht wird, dass es ein Zwischen-Ordnern-Bewegen-Beendungsereignis des Anwendungssymbols gibt, Löschen des Anwendungssymbols aus dem ersten Ordner und Einfügen des Anwendungssymbols in den ausgewählten Zielordner, und wobei der erste aufgeklappte Ordner als eine aktuelle aktive Schnittstelle unterhalten wird;
wobei das Verfahren **dadurch gekennzeichnet ist, dass** das Anzeigen (S101) von wenigstens einem Zielordner in einem sichtbaren Bereich eines aktuellen Desktops Folgendes aufweist:
Anzeigen von anderen Ordnern als dem ersten Ordner des aktuellen Desktops in dem sichtbaren Bereich des aktuellen Desktops; oder
Anzeigen von anderen Ordnern als dem ersten Ordner aller Desktops in dem sichtbaren Bereich des aktuellen Desktops;
wobei das Anzeigen von wenigstens einem Zielordner in einem sichtbaren Bereich eines aktuellen Desktops Folgendes aufweist:
Anzeigen (S301) der Zielordner auf Seiten, die in einem Zielordneranzeigebereich im sichtbaren Bereich des aktuellen Desktops angezeigt werden, falls eine Anzahl der Zielordner größer als eine Anzahl von Ordnern ist, die in den Zielordneranzeigebereich innerhalb des sichtbaren Bereichs des aktuellen Desktops gelegt werden können;
wobei das Verfahren ferner Folgendes aufweist:
Verschieben (S302) des Zielordneranzeigebereichs zum Anzeigen von Zielordnern auf anderen Seiten.

2. Verfahren nach Anspruch 1, das ferner Folgendes aufweist:
nach dem Löschen des Anwendungssymbols aus dem ersten Ordner und Einfügen des Anwendungssymbols in den ausgewählten Zielordner, Unterhalten (S203, S304) des ersten aufgeklappten Ordners als eine aktuelle aktive Schnittstelle.

3. Verfahren nach Anspruch 1, wobei das Überwachen, dass es ein Zwischen-Ordnern-Bewegen-Auslöseereignis eines Anwendungssymbols gibt, Folgendes aufweist:
Überwachen, dass eine vorbestimmte Aktion an dem zu bewegenden Anwendungssymbol im ersten aufgeklappten Ordner durchgeführt wird.

4. Verfahren nach Anspruch 1, wobei das Überwachen, dass es ein Zwischen-Ordnern-Bewegen-Beendungsereignis des Anwendungssymbols gibt, Folgendes aufweist:
Überwachen, dass das Anwendungssymbol von einem gedrückten Zustand in einen freigegebenen Zustand umgeschaltet wird; oder
Überwachen, dass es eine Auswahloperation am Zielordner gibt.

5. Verfahren nach Anspruch 1, wobei das Löschen des Anwendungssymbols aus dem ersten Ordner und das Einfügen des Anwendungssymbols in den ausgewählten Zielordner Folgendes aufweist:
Löschen des Anwendungssymbols aus dem ersten Ordner und Anordnen gemäß einer voreingestellten Regel und Anzeigen von anderen Anwendungssymbolen als dem Anwendungssymbol im ersten Ordner;
Einfügen des Anwendungssymbols in eine voreingestellte Position im ausgewählten Zielordner.

6. Verfahren nach Anspruch 1, das ferner Folgendes aufweist:
Abbrechen (S204, S305) des Anzeigens des Zielordners im sichtbaren Bereich des aktuellen Desktops, wenn überwacht wird, dass es ein Zwischen-Ordnern-Bewegen-Abbruchereignis des Anwendungssymbols gibt.

7. Endgerät zum Verwalten einer Endgerätanwendung, das Folgendes aufweist:
ein Zielordneranzeigemodul (51), das konfiguriert ist zum Anzeigen von wenigstens einem Anwendungssymbol eines ersten Ordners eines aktuellen Desktops und zum Anzeigen von wenigstens einem Zielordner in einem sichtbaren Bereich eines aktuellen Desktops, wenn überwacht wird, dass es ein Zwischen-Ordnern-Bewegen-Auslöseereignis eines Anwendungssymbols gibt, wobei der Zielordner vom ersten Ordner verschieden ist, in dem sich das Anwendungssymbol befindet;
ein Zwischen-Ordnern-Bewegen-Modul (52), das konfiguriert ist zum Bestimmen eines ausgewählten Zielordners aus dem wenigstens einen Zielordner, wenn überwacht wird, dass es ein Zwischen-Ordnern-Bewegen-Beendungsereignis des Anwendungssymbols gibt, zum Löschen des Anwendungssymbols aus dem ersten Ordner und zum Einfügen des Anwendungssymbols in den ausgewählten Zielordner, und wobei der erste aufgeklappte Ordner als eine aktuelle aktive Schnittstelle unterhalten wird;
wobei das Endgerät **dadurch gekennzeichnet ist, dass** das Zielordneranzeigemodul (51) Folgendes enthält:
ein erstes Anzeigeuntermodul (511), das konfiguriert ist zum Anzeigen von anderen Ordnern als dem ersten Ordner des aktuellen Desktops im sichtbaren Bereich des aktuellen Desktops; oder
ein zweites Anzeigeuntermodul (512), das konfiguriert ist zum Anzeigen von anderen Ordnern als dem ersten Ordner aller Desktops im sichtbaren Bereich des aktuellen Desktops;
wobei das Zielordner-Anzeigemodul (511) Folgendes aufweist:
ein drittes Anzeigeuntermodul (513), das konfiguriert ist zum Anzeigen der Zielordner auf Seiten in einem Zielordneranzeigebereich innerhalb des sichtbaren Bereichs des aktuellen Desktops, falls eine Anzahl der Zielordner größer als eine Anzahl von Ordnern ist, die in den Zielordneranzeigebereich innerhalb des sichtbaren Bereichs des aktuellen Desktops gelegt werden können;
wobei das Endgerät ferner Folgendes aufweist:
ein Verschiebungsmodul (55), das zum Verschieben des Zielordneranzeigebereichs zum Anzeigen von Zielordnern auf anderen Seiten konfiguriert ist.

8. Endgerät nach Anspruch 7, das ferner Folgendes aufweist:
ein Unterhaltungsmodul (53), das konfiguriert ist zum Unterhalten des ersten aufgeklappten Ordners als eine aktuelle aktive Schnittstelle, nachdem das Zwischen-Ordnern-Bewegen-Modul das Anwendungssymbol in den ausgewählten Zielordner eingefügt hat.

9. Endgerät nach Anspruch 7, das ferner Folgendes aufweist:
ein erstes Überwachungsmodul (54), das konfiguriert ist zum Überwachen einer vorbestimmten Aktion, die an dem zu bewegenden Anwendungssymbol im ersten aufgeklappten Ordner durchgeführt wird.

10. Endgerät nach Anspruch 9, das ferner Folgendes aufweist:
ein zweites Überwachungsmodul (56), das konfiguriert ist zum Überwachen, dass das Anwendungssymbol von einem gedrückten Zustand in einen freigegebenen Zustand umgeschaltet wird; oder
ein drittes Überwachungsmodul (57), das konfiguriert ist zum Überwachen einer Auswahloperation am Zielordner.

11. Endgerät nach Anspruch 9, das ferner Folgendes aufweist:
ein viertes Überwachungsmodul (59), das konfiguriert ist zum Überwachen eines Zwischen-Ordnern-Bewegen-Abbruchereignisses des Anwendungssymbols;
ein Abbruchmodul (59), das konfiguriert ist zum Abbrechen des Anzeigens des Zielordners im sichtbaren Bereich des aktuellen Desktops, wenn überwacht wird, dass es das Zwischen-Ordnern-Bewegen-Abbruchereignis gibt.

## Revendications

1. Procédé de gestion d'une application de terminal, comprenant :
afficher au moins une icône d'application d'un premier dossier d'un bureau courant ;
afficher (S101, S201) au moins un dossier cible dans une zone visible d'un bureau courant, en surveillant qu'il y a un événement déclencheur de déplacement entre dossiers d'une icône d'application, le dossier cible étant différent du premier dossier dans lequel l'icône d'application est située ;
déterminer (S102, S202, S303) un dossier cible sélectionné parmi le au moins un dossier cible, en surveillant qu'il y a un événement de fin de déplacement entre dossiers de l'icône d'application, supprimer l'icône d'application du premier dossier et ajouter l'icône d'application dans le dossier cible sélectionné, et le premier dossier ouvert est maintenu comme une interface active courante ;
procédé étant **caractérisé en ce que**, afficher (S101) au moins un dossier cible dans une zone visible d'un bureau courant, comprend :
afficher des dossiers autres que le premier dossier du bureau courant dans la zone visible du bureau courant ; ou bien
afficher des dossiers autres que le premier dossier de tous les bureaux dans la zone visible du bureau courant ;
où afficher au moins un dossier cible dans une zone visible d'un bureau courant comprend :
afficher (S301) les dossiers cibles dans des pages affichées dans une zone d'affichage de dossiers cibles dans la zone visible du bureau courant, si un nombre des dossiers cibles est plus grand qu'un nombre de dossiers pouvant être placés dans la zone d'affichage de dossiers cibles dans la zone visible du bureau courant ;
le procédé comprenant en outre :
glisser (S302) la zone d'affichage de dossiers cibles pour afficher des dossiers cibles dans d'autres pages.

2. Procédé selon la revendication 1, comprenant en outre :
après avoir supprimer l'icône d'application du premier dossier et ajouter l'icône d'application dans le dossier cible sélectionné, maintenir (S203, S304) le premier dossier ouvert comme une interface active courante.

3. Procédé selon la revendication 1, dans lequel surveiller qu'il y a un événement déclencheur de déplacement entre dossiers d'une icône d'application comprend :
surveiller qu'il y a une action prédéterminée effectuée sur l'icône d'application à déplacer dans le premier dossier ouvert.

4. Procédé selon la revendication 1, dans lequel surveiller qu'il y a un événement de fin de déplacement entre dossiers de l'icône d'application comprend :
surveiller que l'icône d'application est commutée d'un état actionné à un état relâché ; ou bien
surveiller qu'il y a une opération de sélection sur le dossier cible.

5. Procédé selon la revendication 1, dans lequel supprimer l'icône d'application du premier dossier et ajouter l'icône d'application dans le dossier cible sélectionné comprend :
supprimer l'icône d'application du premier dossier, et arranger conformément à une règle préréglée et afficher des icônes d'application autres que l'icône d'application dans le premier dossier ;
ajouter l'icône d'application dans un emplacement préréglé dans le dossier cible sélectionné.

6. Procédé selon la revendication 1, comprenant en outre :
annuler (S204, S305) l'affichage du dossier cible dans la zone visible du bureau courant, en surveillant qu'il y a un événement d'annulation de mouvement entre dossiers de l'icône d'application.

7. Terminal de gestion d'une application de terminal, comprenant :
un module d'affichage de dossiers cibles (51), configuré pour afficher au moins une icône d'application d'un premier dossier d'un bureau courant, et pour afficher au moins un dossier cible dans une zone visible d'un bureau courant, en surveillant qu'il y a un événement déclencheur de déplacement entre dossiers d'une icône d'application, le dossier cible étant différent du premier dossier dans lequel l'icône d'application est située ;
un module de déplacement entre dossiers (52), configuré pour déterminer un dossier cible sélectionné parmi le au moins un dossier cible, en surveillant qu'il y a un événement de fin de déplacement entre dossiers de l'icône d'application, pour supprimer l'icône d'application du premier dossier et ajouter l'icône d'application dans le dossier cible sélectionné, et le premier dossier ouvert est maintenu comme une interface active courante ;
le terminal étant **caractérisé en ce que**, le module d'affichage de dossier cible (51) comprend :
un premier sous-module d'affichage (511), configuré pour afficher des dossiers autres que le premier dossier du bureau courant dans la zone visible du bureau courant ; ou bien
un deuxième sous-module d'affichage (512), configuré pour afficher des dossiers autres que le premier dossier de tous les bureaux dans la zone visible du bureau courant ;
où le module d'affichage de dossiers cibles (51) comprend :
un troisième sous-module d'affichage (513), configuré pour afficher des dossiers cibles dans des pages dans une zone d'affichage de dossiers cibles dans la zone visible du bureau courant, si un nombre des dossiers cibles est plus grand qu'un nombre de dossiers pouvant être placés dans la zone d'affichage de dossiers cibles dans la zone visible du bureau courant ;
le terminal comprend en outre :
un module de glissement (55), configuré pour glisser la zone d'affichage de dossiers cibles de manière à afficher des dossiers cibles dans d'autres pages.

8. Terminal selon la revendication 7, comprenant en outre :
un module de maintien (53), configuré pour maintenir le premier dossier ouvert comme une interface active courante, après que le module de déplacement entre dossiers a ajouté l'icône d'application dans le dossier cible sélectionné.

9. Terminal selon la revendication 7, comprenant en outre :
un premier module de surveillance (54), configuré pour surveiller une action prédéterminée effectuée sur l'icône d'application à déplacer dans le premier dossier ouvert.

10. Terminal selon la revendication 9, comprenant en outre :
un deuxième module de surveillance (56), configuré pour surveiller que l'icône d'application est commutée d'un état actionné à un état relâché ; ou bien
un troisième module de surveillance (57), configuré pour surveiller une opération de sélection sur le dossier cible.

11. Terminal selon la revendication 9, comprenant en outre :
un quatrième module de surveillance (58), configuré pour surveiller un événement d'annulation de déplacement entre dossiers de l'icône d'application ;
un module d'annulation (59), configuré pour annuler l'affichage du dossier cible dans la zone visible du bureau courant, lorsqu'il est observé qu'il y a un événement d'annulation de déplacement entre dossiers de l'icône d'application.
